# DEMANDE DE BREVET EUROPEEN

(11) **EP 2 065 098 A2**
(43) Date de publication de la demande: **03.06.2009**
(21) Numéro de dépôt: 08169184.2
(22) Date de dépôt: 14.11.2008
(51) Int. Cl.: B05B 7/08, B29C 44/46

(54) **Procédé, dispositif et installation pour la fabrication de panneau par épandage de mousse synthétique**

(30) Priorité: 28.11.2007 FR 0759359
(71) Demandeur: FPM Industries, 57380 Faulquemont (FR)
(72) Inventeur: Pesant, Alain, 57000 Metz (FR); Cabrillon, Pierre, 57000 Metz (FR); Fisselbrand, Jean-Yves, 57420 Louvigny (FR)
(74) Mandataire: Brungard, Yves Francois

(57) **Abrégé**

Pour fabriquer un panneau composite comportant au moins une feuille (2) recouverte par une âme 3 en mousse synthétique, on prépare une mousse en expansion pour réaliser l'âme (3), on dépose la mousse en expansion sur la feuille (2) avec un mouvement d'avancement relatif en translation entre la feuille (2) et l'épandage de la matière synthétique. La mousse en expansion sort de l'orifice d'une buse (132) dans une direction de buse (B), et on souffle un jet (G) de gaz oblique par rapport à la direction de buse (B) pour que la mousse en expansion soit projetée sur la feuille (2).

Dispositif et installation pour mettre en oeuvre le procédé.

## Description

L'invention concerne un procédé de fabrication d'un panneau composite comportant au moins une feuille recouverte par une âme en mousse synthétique. Elle concerne également un dispositif d'épandage de la mousse sur la feuille et une installation de fabrication mettant en oeuvre le procédé.

On utilise dans la construction de bâtiment des panneaux formés de deux parements enserrant une âme en mousse synthétique. Les parements sont par exemple métalliques, en aluminium ou en acier. L'âme est par exemple en mousse de polyuréthane. De tels panneaux peuvent aussi être utilisés par la construction de chambres froides ou pour des véhicules de transport, par exemple frigorifique.

On connaît par exemple par le document GB 2 383 972 une installation de fabrication de tels panneaux. Un parement inférieur sous la forme d'une feuille continue défile dans l'installation. Un bras orienté dans la direction de défilement de la feuille dépose un mélange de produits réactifs en phase d'expansion pour fabriquer la mousse. Après le poste de dépose de la mousse, le parement supérieur est déroulé au dessus de la mousse déposée qui se développe et comble l'espace jusqu'au parement supérieur. Les panneaux sont ensuite découpés à la longueur voulue.

Le bras est un tube horizontal percé d'orifices régulièrement espacés et débouchants vers le bas. Le bras est alimenté par le mélange et laisse couler des filets du mélange par les orifices. Le bras est animé d'un mouvement alternatif transversal, de manière à balayer toute la largeur du parement.

Une telle installation est limitée en productivité. En effet, le mouvement alternatif a une vitesse limite, due en particulier à l'inversion de mouvement près des bords. De plus, si le mouvement est trop rapide, de la mousse est projetée en dehors de la zone de travail. Enfin, si on souhaite augmenter la largeur du panneau, il faut diminuer la vitesse d'avancement du parement.

L'invention vise donc à fournir un procédé et une installation de fabrication de panneau composite comportant au moins une feuille recouverte par une âme en mousse synthétique, qui puisse avoir une bonne productivité.

Avec ces objectifs en vue, l'invention a pour objet un procédé de fabrication d'un panneau composite comportant au moins une feuille recouverte par une âme en mousse synthétique, procédé selon lequel on prépare une mousse en expansion pour réaliser l'âme, on dépose la mousse en expansion sur la feuille avec un mouvement de translation relatif entre la feuille et la pose de la matière synthétique. On fait sortir la mousse en expansion de l'orifice d'une buse dans une direction de buse, et on souffle un jet de gaz oblique par rapport à la direction de buse pour que la mousse en expansion soit projetée sur la feuille.

En soufflant ainsi sur le produit en cours de moussage avant qu'il atteigne la feuille, on oriente et répartit le produit sur la feuille, ce qui permet de s'affranchir du dispositif de répartition à mouvement alternatif selon l'art antérieur. On contrôle également la vitesse d'impact du produit sur la feuille indépendamment de la pression d'alimentation du produit, ce qui permet de contrôler son étalement.

De préférence, le jet de gaz est sensiblement de la forme d'un secteur angulaire de manière à projeter la mousse en expansion sur toute la largeur du secteur angulaire. Le jet, qui est ainsi divergent à partir du sommet du secteur angulaire, permet de répartir le produit sur une largeur importante, en transmettant le mouvement divergent au produit.

De manière particulière, le jet de gaz est orienté dans le même sens que le déplacement de la feuille. Un front de mousse se forme sur la feuille et l'avancement de la feuille permet d'évacuer le produit qui arrive en continu, assurant le renouvellement du front.

Selon un choix particulier, le gaz est de l'air. On peut utiliser un réseau d'air comprimé ou un compresseur spécifique pour l'installation, sans avoir de gaz à approvisionner.

L'invention a aussi pour objet un dispositif d'épandage de mousse en expansion comportant une buse pour distribuer la mousse en expansion par un orifice de buse, et un injecteur pour souffler un jet de gaz par un orifice d'injection, l'orifice d'injection étant configuré de telle sorte que le jet croise l'axe de la buse en regard de l'orifice de buse.

De manière particulière, l'orifice de buse est en biseau orienté vers l'injecteur. On évite ainsi de masquer le produit qui débouche de la buse au jet de gaz. Au contraire, le produit est ainsi exposé au jet de gaz qui peut imprimer son mouvement au produit dès sa sortie de la buse. De manière plus spécifique, l'angle entre le biseau et l'axe de buse est plus faible que l'angle entre le jet et l'axe de buse. Ainsi, le produit sortant de la buse a plus d'espace de part et d'autre de l'axe de la buse que dans une zone centrale, ce qui permet d'élargir le flux de produit à la sortie de la buse.

Selon une disposition avantageuse, l'orifice d'injection est configuré de telle sorte que le jet de gaz est sensiblement de la forme d'un secteur angulaire.

L'invention a encore pour objet une installation de fabrication de panneau composite comportant au moins une feuille recouverte par une âme en mousse synthétique, l'installation comportant des moyens de distribution de mousse en expansion, des moyens d'entraînement pour donner un mouvement de translation relatif dans un sens d'avancement entre la feuille et les moyens de distribution. Les moyens de distribution comporte au moins un dispositif d'épandage tel que décrit précédemment.

Un dispositif d'épandage permet de couvrir une largeur prédéterminée. En ajustant le nombre de dispositifs, on peut couvrir toute la largeur de feuille. La largeur de la feuille n'a pas d'influence sur la vitesse de fonctionnement de l'installation. Il suffit d'adapter le nombre de dispositifs d'épandage et le débit de produit.

De manière particulière, l'injecteur est placé en amont de la buse par rapport au sens d'avancement.

De préférence, la rampe supporte une pluralité de dispositifs d'épandage répartis selon une direction transversale au sens d'avancement.

Selon un perfectionnement, la rampe comporte des moyens d'orientation pour orienter les dispositifs selon la direction transversale. On peut donc obtenir un réglage de l'orientation des jets de gaz par rapport à la feuille ainsi que de la distance entre la feuille et les dispositifs d'épandage.

L'invention sera mieux comprise et d'autres particularités et avantages apparaîtront à la lecture de la description qui va suivre, la description faisant référence aux dessins annexés parmi lesquels :
- la figure 1 est une vue en perspective d'une installation conforme à l'invention ;
- la figure 2 est une vue de côté d'un dispositif d'épandage de l'installation de la figure 1 ;
- la figure 3 est une vue en perspective du dispositif de la figure 2
- la figure 4 est une vue d'un dispositif d'épandage en coupe selon les axes de la buse et de l'injecteur.

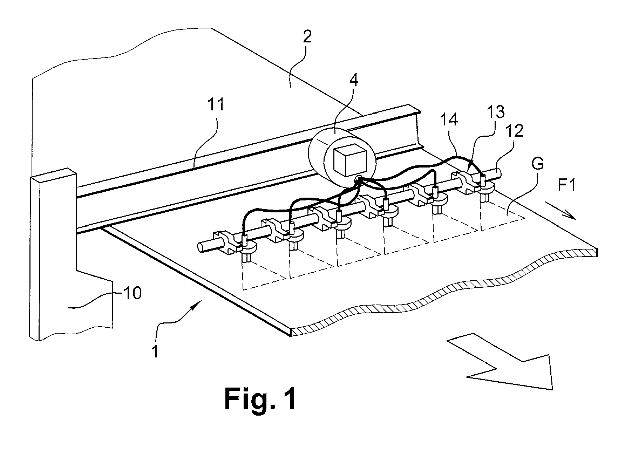

Une installation 1 de fabrication de panneau comportant au moins une feuille 2 recouverte par une âme 3 en mousse synthétique, conforme à l'invention et telle que montrée sur la figure 1, comporte un châssis 10 sur lequel une feuille 2 telle qu'un tôle d'acier est destinée à avancer. Les moyens d'entraînement de la tôle sont classiques et ne sont pas représentés. Ils permettent de déplacer la feuille 2 dans le sens de déplacement représenté par la flèche F1.

L'installation 1 comporte un bras de support 11 s'étendant au-dessus de la feuille 2 et transversalement par rapport à la direction d'avancement F1. Une tête mélangeuse 4 est fixée sur le bras de support 11. La tête mélangeuse 4 est connectée à deux conduites d'alimentation, non représentées pour amener deux composants, tels que du polyol et de l'isocyanate. Le mélange des deux composants dans des proportions prédéterminées permet dans ce cas de produire un produit qui se transforme progressivement en mousse de polyuréthane par expansion.

Par ailleurs, une rampe 12 est fixée également sur le bras. La rampe 12 est une barre qui s'étend parallèlement au bras. La rampe 12 supporte une pluralité de dispositifs d'épandage 13, soit six dispositifs dans l'exemple représenté, répartis de manière égale sur la largeur de la feuille 2. Chaque dispositif d'épandage 13 est relié d'une part à la tête mélangeuse 4 pour recevoir du produit et à une alimentation en air 15, non représentée sur la figure 1. La connexion à la tête mélangeuse 4 et la longueur des tuyaux d'alimentation 14 en produit sont telles que le produit est réparti de manière égale entre tous les dispositifs 13.

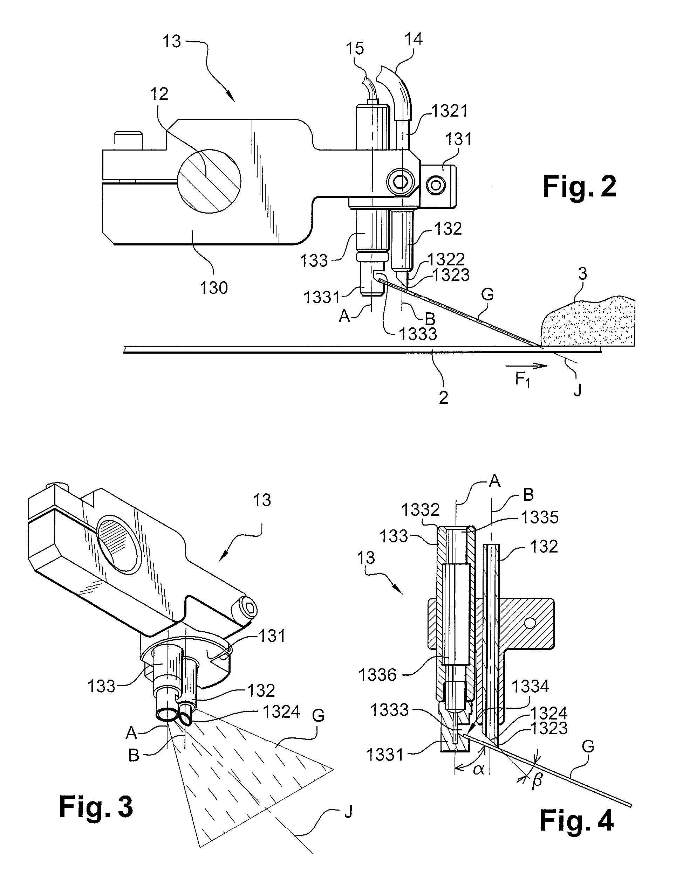

Les figures 2 à 4 représentent plus en détail un tel dispositif d'épandage 13. Le dispositif d'épandage 13 comporte une pince 130, un corps 131 fixé sur la pince 130, ainsi qu'une buse 132 et un injecteur 133 fixés sur le corps 131. La pince 130 est serrée sur la rampe 12 pour y être fixée. La buse 132 est un simple tube dont l'axe de buse B est orienté sensiblement perpendiculairement à la feuille 2. La buse 132 reçoit à une première extrémité 1321, la plus éloignée de la feuille 2, le tuyau d'alimentation 14 en produit. L'autre extrémité 1322, la plus proche de la feuille 2, est coupée en biseau, de manière à former un orifice de buse 1324. La pointe 1323 du biseau est vers l'aval par rapport à la direction d'avancement F1.

L'injecteur 133 comporte un corps cylindrique dont l'axe A est placé parallèlement à l'axe de la buse B. L'extrémité 1331 de l'injecteur 133 la plus proche de la feuille 2 comporte une entaille 1333 latérale présentant une face inclinée 1334 par rapport à l'axe du corps de l'injecteur 133. L'entaille 1333 est en regard du biseau de la buse 132. L'injecteur 133 comporte à sa deuxième extrémité 1332 un orifice d'alimentation 1335 destiné à être connecté à un conduit d'air. Un canal 1336 traverse le corps en partant de l'orifice d'alimentation 1335 et débouche en regard de la face inclinée 1334. La position relative de l'injecteur 133 et de la buse 132 est telle que le plan défini par la face inclinée 1334 est presque tangent à la pointe 1323 du biseau, à quelques dixièmes de millimètre près. L'angle α de la face inclinée 1334 par rapport à l'axe de l'injecteur 133 est compris entre 45° et 60°. L'angle β entre le biseau et la face inclinée 1334 est de 0° à 20°. Ainsi, l'angle entre le biseau et l'axe de buse B est plus faible que l'angle entre le jet G et l'axe de buse B.

Lors du fonctionnement de l'installation 1, la feuille 2 est entraînée en translation dans le sens de la flèche F1. La tête mélangeuse 4 est alimentée en isocyanate et en polyol afin de mélanger ces deux composants. Le produit obtenu par le mélange est distribué de manière égale à chacun des dispositifs d'épandage 13, vers les buses 132. Le produit, en phase d'expansion en mousse, traverse la buse 132 et débouche par le biseau. En même temps, de l'air est envoyé par le canal 1336 de l'injecteur 133 et est dévié par la face inclinée 1334 pour former un jet G en forme de secteur à partir de cette face inclinée 1334. Typiquement, le débit d'air est de 300 m3/h et la pression est de 5 bars.

Le jet d'air G rencontre la trajectoire du produit sortant de la buse 132 et entraîne ledit produit. La quantité de produit entraînée par le jet selon un axe principal de jet J reliant l'injecteur 133 et l'axe de la buse B est limitée par la pointe 1323 du biseau qui laisse peu d'espace pour que le produit s'échappe selon cet axe principal de jet J. Par contre, le produit trouve plus facilement à s'écouler de part et d'autre de la pointe 1323 du biseau et est entrainé selon des directions divergentes par rapport à l'axe principal de jet J. Le produit est dispersé et atteint la feuille 2 sur une largeur de 6 à 20 fois supérieure au diamètre de la buse 132 et proche de l'intervalle entre les dispositifs. L'épandage de mousse est suivi par la mise en place du parement supérieur, de manière classique et non détaillée ici. La mousse une fois expansée se polymérise.

Ainsi, le produit est bien réparti sur la largeur de la feuille 2 et des cadences importantes peuvent être atteintes. A titre d'exemple, selon la technique antérieure, la vitesse d'avancement d'une feuille de 1000 mm de large était typiquement de 9 m/min (pour une charge de mousse de 40 g/m²). Avec une installation selon l'invention, une vitesse de 30 m/min peut facilement être atteinte.

L'invention n'est pas limitée au mode de réalisation qui vient d'être décrit. L'installation 1 permet d'épandre d'autres types de bi-composant, telles que des colles ou des primaires d'accrochage. Les dispositifs ne sont pas nécessairement alignés, mais peuvent être disposés en quinconce. Ils peuvent aussi être disposés en partie verticale vers le haut pour projeter sur la face inférieure du panneau supérieur.

## Revendications

1. Procédé de fabrication d'un panneau composite comportant au moins une feuille (2) recouverte par une âme 3 en mousse synthétique, procédé selon lequel on prépare une mousse en expansion pour réaliser l'âme (3), on dépose la mousse en expansion sur la feuille (2) avec un mouvement d'avancement relatif en translation entre la feuille (2) et l'épandage de la matière synthétique, **caractérisé en ce que** la mousse en expansion sort de l'orifice d'une buse (132) dans une direction de buse (B), et on souffle un jet (G) de gaz oblique par rapport à la direction de buse (B) pour que la mousse en expansion soit projetée sur la feuille (2).

2. Procédé selon la revendication 1, dans lequel le jet (G) de gaz est sensiblement de la forme d'un secteur angulaire de manière à projeter la mousse en expansion sur toute la largeur du secteur angulaire.

3. Procédé selon la revendication 1, dans lequel le jet (G) de gaz est orienté dans le même sens que le déplacement de la feuille (2).

4. Procédé selon la revendication 1, dans lequel le gaz est de l'air.

5. Installation de fabrication de panneau composite comportant au moins une feuille (2) recouverte par une âme (3) en mousse synthétique, l'installation comportant des moyens de distribution de mousse en expansion, des moyens d'entraînement pour donner un mouvement d'avancement relatif en translation dans un sens d'avancement entre la feuille (2) et les moyens de distribution, l'installation comportant au moins un dispositif d'épandage de mousse en expansion, le dispositif comportant une buse (132) pour distribuer la mousse en expansion par un orifice de buse (1324), **caractérisé en ce que** le dispositif d'épandage comporte en outre un injecteur (133) pour souffler un jet (G) de gaz par un orifice d'injection, l'orifice d'injection étant configuré de telle sorte que le jet (G) croise l'axe de la buse (B) en regard de l'orifice de buse (1324).

6. Installation selon la revendication 5, dans laquelle l'orifice de buse (1324) est en biseau orienté vers l'injecteur (133).

7. Installation selon la revendication 6, dans laquelle l'angle entre le biseau et l'axe de buse (B) est plus faible que l'angle entre le jet (G) et l'axe de buse (B).

8. Installation selon la revendication 5, dans laquelle l'orifice d'injection est configuré de telle sorte que le jet (G) de gaz est sensiblement de la forme d'un secteur angulaire.

9. Installation selon la revendication 5, dans laquelle l'injecteur (133) est placé en amont de la buse (132) par rapport au sens d'avancement.

10. Installation selon la revendication 5, **caractérisée en ce qu'**elle comporte une rampe (12) supportant une pluralité de dispositifs d'épandage (13) répartis selon une direction transversale au sens d'avancement.

11. Installation selon la revendication 10, dans laquelle la rampe (12) comporte des moyens d'orientation pour orienter les dispositifs (13) selon la direction transversale.
